# EUROPÄISCHE PATENTSCHRIFT

(11) **EP 1 725 423 B1**
(45) Veröffentlichungstag und Bekanntmachung des Hinweises auf die Patenterteilung: **02.01.2013**
(21) Anmeldenummer: 05715070.8
(22) Anmeldetag: 09.03.2005
(51) Int. Cl.: B60L 13/08

(54) **FÜHRMAGNETSYSTEM UND DAMIT AUSGERÜSTETES MAGENTSCHWEBEFAHRZEUG**
GUIDING MAGNET SYSTEM AND MAGNETIC LEVITATION VEHICLE EQUIPPED THEREWITH
SYSTEME MAGNETIQUE DE GUIDAGE ET VEHICULE A SUSTENTATION MAGNETIQUE EQUIPE DE CE DERNIER

(30) Priorität: 15.03.2004 DE 102004012747; 19.11.2004 DE 102004056438
(43) Veröffentlichungstag der Anmeldung: 29.11.2006
(73) Patentinhaber: ThyssenKrupp Transrapid GmbH, 34127 Kassel (DE)
(72) Erfinder: HAHN, Wolfgang, 34125 Kassel (DE); LÖSER, Friedrich, 85521 Riemerling (DE)
(74) Vertreter: Lorenz, Bernd Ingo Thaddeus
(86) Internationale Anmeldenummer: PCT/DE2005/000405
(87) Internationale Veröffentlichungsnummer: WO 2005/090117

(56) Entgegenhaltungen:
- GB-A- 1 272 488
- US-A- 4 142 469
- US-A- 6 044 770

## Beschreibung

Die Erfindung betrifft ein Führmagnetsystem der im Oberbegriff des Anspruchs 1 angegebenen Gattung und ein damit ausgerüstetes Magnetschwebefahrzeug.

Führmagnetsysteme dieser Art dienen dem Zweck, ein Magnetschwebefahrzeug insbesondere bei Kurvenfahrten in der Spur zu halten und die Magnetanordnungen mit Hilfe von Regelkreisen und diesen zugeordneten Spaltsensenoren so zu steuern, daß ein nachfolgend als Führspalt bezeichneter Spalt zwischen ihren Magnetpolen und einer Seitenführschiene stets auf einem vorgewählten Wert von z. B. 10 mm gehalten wird. Bei bekannten Führmagnetsystemen sind dazu pro Fahrzeug oder Fahrzeugsektion in Fahrzeuglängsrichtung jeweils zwei Gruppen von je drei hintereinander angeordneten Führmagneten und je ein zwischen den beiden Gruppen liegender Bremsmagnet vorgesehen. Jeder Führmagnet wird durch eine Magnetanordnung gebildet, die einen in Fahrzeuglängsrichtung erstreckten Kern mit zwei Wicklungsebenen aufweist, in denen jeweils drei Wicklungen und diesen zugeordnete Spaltsensoren hintereinander angeordnet sind. Dabei sind die sechs Wicklungen und entsprechend viele Spaltsensoren in jeder Magnetanordnung jeweils paarweise derart in Reihenschaltung verbunden und an die Regelkreise angeschlossen, daß sich weitgehende Redundanz ergibt. Das bedeutet, daß an denjenigen Enden einer Magnetanordnung, die an eine führmagnetfreie Zone, d. h. z. B. an eine von einem Bremsmagneten gebildete Lücke oder an das Vorder- oder Hinterende des Fahrzeugs grenzen, die beiden dort übereinander liegenden Wicklungen durch unterschiedliche Regelkreise bedient werden. Gleichzeitig wird an denjenigen Enden der Magnetanordnungen, die an eine andere Magnetanordnung angrenzen, ein redundantes Verhalten dadurch erzielt, daß beim Ausfall der dort befindlichen Wicklungen oder Regelkreise die Führfunktion vom benachbarten Führmagneten mit übernommen wird, indem dessen angrenzende Wicklungen mit einem entsprechend höheren Strom beaufschlagt werden. Allerdings treten hierbei wegen der bestehenden Unsymmetrien Rollmomente um die Fahrzeuglängsachse auf.

Abgesehen davon sind die beschriebenen Führmagnetsysteme in verschiedener Hinsicht nicht ausreichend variabel. Das gilt sowohl im Hinblick auf die im Einzelfall an die Redundanz gestellten Anforderungen als auch im Hinblick auf die Zahl der vorhandenen Wicklungen und der zwischen diesen anzubringenden Spaltsensoren. Außerdem sind die Länge der vorhandenen Wicklungen und das maßgeblich durch deren Eisenanteile bestimmte Gewicht der Führmagnetsystemanordnung insgesamt nicht optimal.

Das der Erfindung zugrunde liegende technische Problem besteht daher darin, das Führmagnetsystem der eingangs bezeichneten Gattung so auszubilden, daß sich ohne Verlust an Redundanz eine höhere Flexibilität im Hinblick auf die Ausbildung der einzelnen Führmagnete und deren Anordnung in einem Magnetschwebefahrzeug ergibt, das Gesamtgewicht der Führmagnetanordnung reduziert werden kann und Rollmomente vermieden werden.

Zur Lösung dieses Problems dienen die Merkmale der Ansprüche 1 und 7.

Die Erfindung bringt den Vorteil mit sich, daß jede Magnetanordnung und damit jeder Führmagnet bei Bedarf in sich redundant ausgebildet werden kann. Das bedeutet, daß beim Ausfall irgendeiner Wicklung irgendeines Führmagneten oder des zugehörigen Regelkreises kein Nachbarmagnet mehr benötigt wird, um die Führfunktion der defekten Wicklung mit zu übernehmen. Alternativ ist es aber auch möglich, zur Gewährleistung der Redundanz wie bisher Nachbarmagnete einzubeziehen, dabei jedoch das Gesamtgewicht jedes Führmagnetsystems beträchtlich zu reduzieren und die Anordnung so zu treffen, daß Rollmomente nicht auftreten können. Weiterhin kann in jedem Fall eine ausreichende Anzahl an Spaltsensoren untergebracht werden. Schließlich kann ein Magnetschwebefahrzeug geschaffen werden, bei dem trotz einer gegenüber der bisherigen Bauweise erheblichen Gewichtsreduzierung der Magnetanordnung sichergestellt wird, daß beim Betreiben des Magnetschwebefahrzeugs keine zusätzlichen Lastwechsel auftreten, die vom Fahrweg aufgenommen werden müßten.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 schematisch einen Teilschnitt durch ein übliches Magnetschwebefahrzeug im Bereich eines mit einem Langstator versehenen Fahrwegs;
Fig. 2 in perspektivischer Darstellung einen Modul des Magnetschwebefahrzeugs mit zwei Magnetanordnungen für die Trag- bzw. Führfunktion;
Fig. 3 schematisch einen Regelkreis für die Magnetanordnungen nach Fig. 2;
Fig. 4 schematisch eine teilweise geschnittene, perspektivische Darstellung der Wicklungen der Magnetanordnung eines erfindungsgemäßen Führmagneten;
Fig. 5 eine vergrößerte Einzelheit X der Fig. 4 im Schnitt und in Verbindung mit einer in Fig. 4 nicht sichtbaren Seitenführschiene;
Fig. 6 und 7 schematisch den Aufbau und die Wirkungsweise je eines Führmagnetsystems nach dem Stand der Technik und nach einem ersten Ausführungsbeispiel der Erfindung;
Fig. 8 schematisch eine Seitenansicht eines Teils eines mit dem Führmagnetsystem nach Fig. 7 ausgerüsteten Magnetschwebefahrzeugs;
Fig. 9 in einer der Fig. 7 entsprechenden, schematischen Darstellung den Aufbau eines zweiten Ausführungsbeispiels eines erfindungsgemäßen Führmagnetsystems, bei dem jeweils ein Spulensatz einer in Fig. 7 und 8 redundanten Magnethälfte in eine in Fig. 7 und 8 ebenfalls vorhandene Magnetlücke verlagert ist;
Fig. 10 schematisch eine Seitenansicht eines Teils eines mit dem Führmagnetsystem nach Fig. 9 ausgerüsteten Magnetschwebefahrzeugs; und
Fig. 11 und 12 in den Fig. 9 und 10 entsprechenden Ansichten ein weiteres Ausführungsbeispiel im Bereich des Übergangs zwischen zwei Sektionen eines erfindungsgemäßen Magnetschwebefahrzeugs.

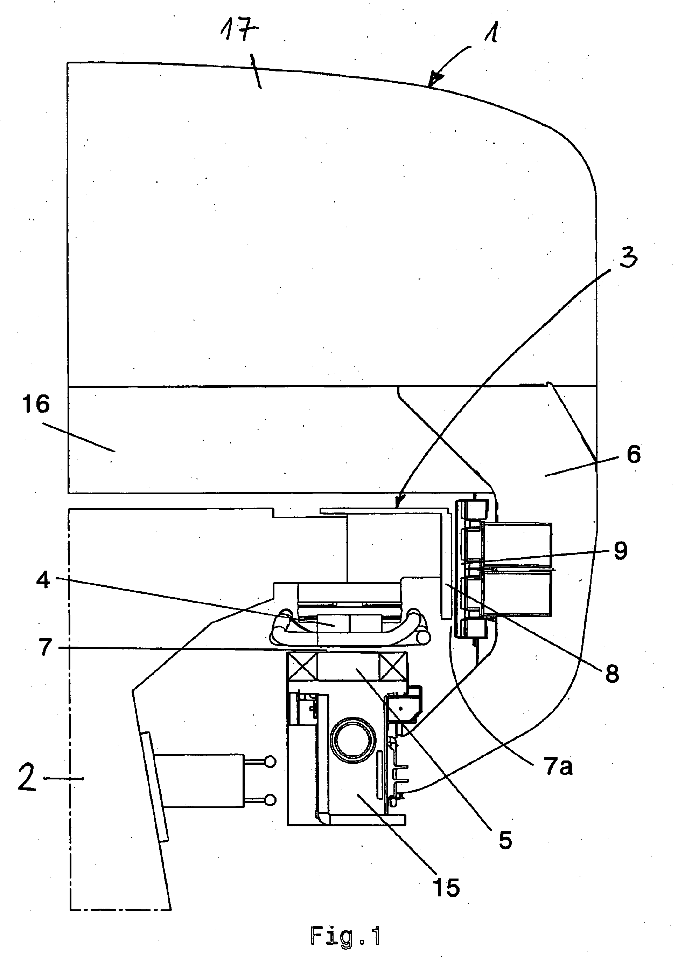

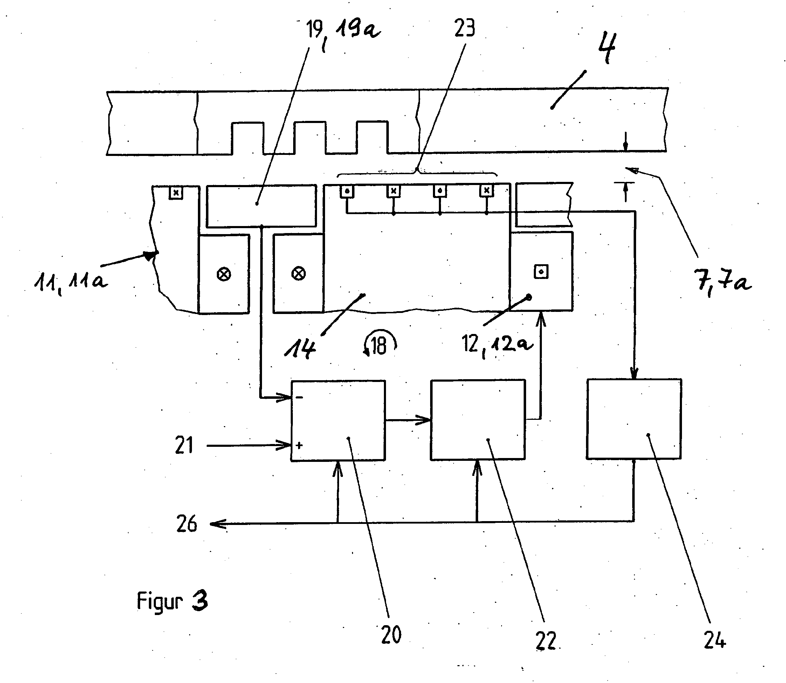

Fig. 1 zeigt schematisch einen Querschnitt durch ein Magnetschwebefahrzeug 1, das in üblicher Weise auf einem in Längsrichtung einer Trasse verlaufenden Fahrweg fahrbar montiert ist, der aus Stahl und/oder Beton hergestellte Träger 2 und auf diesem montierte Fahrwegplatten 3 enthält. Der Antrieb des Magnetschwebefahrzeugs 1 erfolgt mittels eines Langstatormotors, der unterhalb der Fahrwegplatten 3 befestigte, in deren Längsrichtung aufeinander folgende Statorpakete 4 aufweist. Die Statorpakete 4 enthalten abwechselnd aufeinander folgende, nur in Fig. 3 dargestellte Zähne und Nuten, in die Wicklungen eingelegt sind, die mit Drehstrom variabler Amplitude und Frequenz gespeist werden. Das eigentliche Erregerfeld des Langstatormotors wird durch wenigstens eine erste, als Tragmagnet 5 wirkende Magnetanordnung erzeugt, die mit wenigstens einem seitlichen Gestellbügel 6 am Magnetschwebefahrzeug 1 befestigt ist und den in Fig. 1 nach unten offenen Nuten der Statorpakete 4 zugewandte Magnetpole aufweist. Der Tragmagnet 5 stellt nicht nur das Erregerfeld bereit, sondern erfüllt auch die Funktion des Tragens und Schwebens, indem er beim Betrieb dies Magnetschwebefahrzeugs 1 einen vorgegebenen Tragspalt 7 von z. B. 10 mm zwischen dem Tragmagneten 5 und den Statorpaketen 4 aufrecht erhält.

Zur Spurführung des Magnetschwebefahrzeugs 1 weisen die Fahrwegplatten 3 seitlich angebrachte Seitenführschienen 8 auf, denen wenigstens eine zweite, ebenfalls an den Gestellbügeln 6 montierte, als Führmagnet 9 wirkende Magnetanordnung gegenüber steht, die beim Betrieb dazu dient, zwischen sich und der Führschiene 8 einen dem Spalt 7 entsprechenden Führspalt 7a aufrecht zuerhalten.

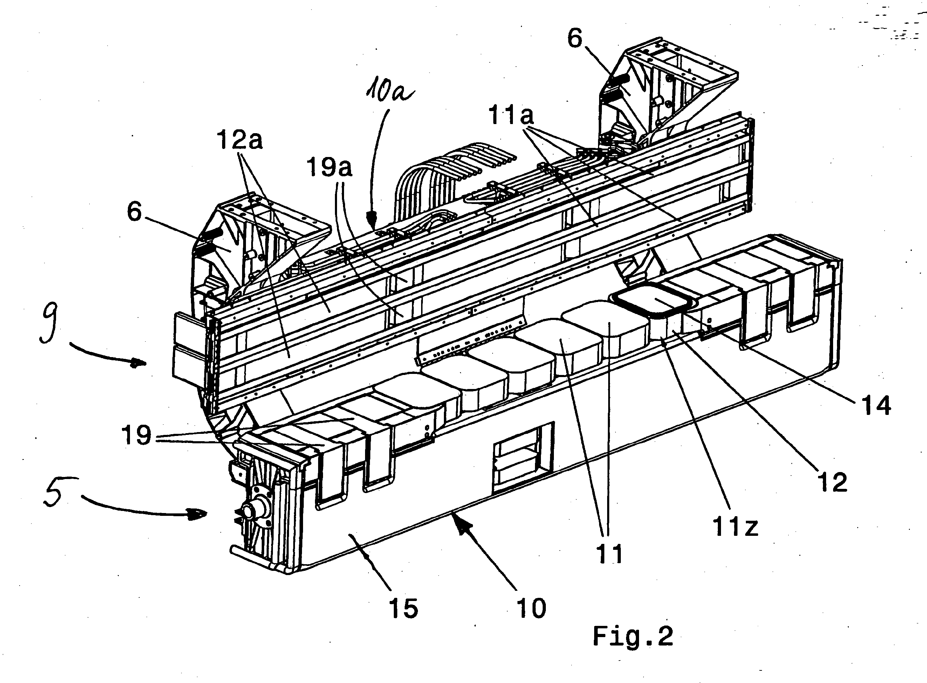

Gemäß Fig. 2 und 3 bilden der Tragmagnet 5 und der Führmagnet 9 jeweils ein an den Gestellbügeln 6 befestigtes Modul mit je einer Magnetanordnung 10 bzw. 10a für die Funktionen "Tragen" bzw. "Führen". Es ist jedoch klar, daß am Magnetschwebefahrzeug 1 seitlich nebeneinander und in Fahrtrichtung hintereinander in der Regel eine Vielzahl derartiger Module angebracht sein kann.

Die Magnetanordnung 10 für die Funktion "Tragen" enthält hintereinander angeordnete Magnetpole 11, deren elektrisch in Reihe geschaltete Wicklungen 12 und Kerne 14, die in Fig. 2 für einen der Magnetpole 11z schematisch angedeutet sind, normalerweise rundum von einem Korrosionsschutz in Form einer Gießharzschicht od. dgl. umgeben sind. Die Kerne 14 der einzelnen Magnetpole 11 sind durch nicht gezeigte Polrücken miteinander verbunden und mittels ebenfalls nicht dargestellter Polwangen und diese durchragender Stäbe an einem Magnetrücken 15 der Magnetanordnung 10 befestigt. An diesem Magnetrücken 15 greifen über Primärfedern die Gestellbügel 6 (Fig. 1) an, die mit einem biegesteifen, Längs- und Querverbinder aufweisenden Untergestell bzw. Schweberahmen 16 verbunden sind, auf dem ein mit einer Fahrgastzelle versehener Wagenkasten 17 des Magnetschwebefahrzeugs 1 (Fig. 1) abgestützt ist.

Die Magnetanordnung 10a enthält in entsprechender Weise an eine gemeinsame Ebene grenzende Magnetpole 11a, die von Kernen und diesen zugeordneten Wicklungen 12a gebildet werden, die in Fig. 2 nur schematisch angedeutet und weiter unten näher beschrieben sind.

Magnetschwebefahrzeuge 1 und deren Magnetanordnungen sind dem Fachmann z. B. aus den Druckschrifter US-PS 4142469, US-PS 4,698,895, DE 39 28 277 A1 und PCT WO 97/30504 A1 allgemein bekannt, die hiermit der Einfachheit halber durch Referenz zum Gegenstand der vorliegenden Offenbarung gemacht werden.

Zur Regelung der Wicklungen 12, 12a der Magnetpole 11 bzw. 11a derart, daß der Spalt 7 bzw. 7a bei der Fahrt des Magnetschwebefahrzeugs 1 konstant bleibt, dient je ein Regelkreis 18 nach Fig. 3. Dieser enthält wenigstens einen, vorzugsweise mehrere Spaltsensoren 19, 19a (vgl. auch Fig. 2), die an dieselbe Ebene wie die Magnetpole 11, 11a grenzen, mit induktiven oder kapazitiven Mitteln die aktuelle Größe des Spalts 7, 7a messen und als Istwertgeber für die Regelkreise 18 dienen. Die von den Spaltsensoren 19, 19a abgegebenen elektrischen Signale werden gemäß Fig. 3 Reglern 20 zugeführt und in diesen mit über eine Leitung 21 fest vorgegebenen Sollwerten verglichen. Die Regler 20 ermitteln daraus Differenz- bzw. Stellsignale für Stellglieder 22, die ihrerseits den Strom durch die Wicklungen 12, 12a so steuern, daß der Spalt 7, 7a eine im wesentlichen konstante Größe einnimmt und während der Fahrt beibehält.

Zur Versorgung der Regelkreise 18 mit der erforderlichen Betriebsspannung dienen gemäß Fig. 3 Energieversorgungseinheiten 23, die im bzw. am Magnetschwebefahrzeug 1 vorgesehene Batterien, Lineargeneratoren, Stromabnehmer od. dgl. enthalten und über Spannungswandler 24 mit den Reglern 20 und Stellgliedern 22 sowie mit an das Bordnetz angeschlossenen Leitungen 26 verbunden sind.

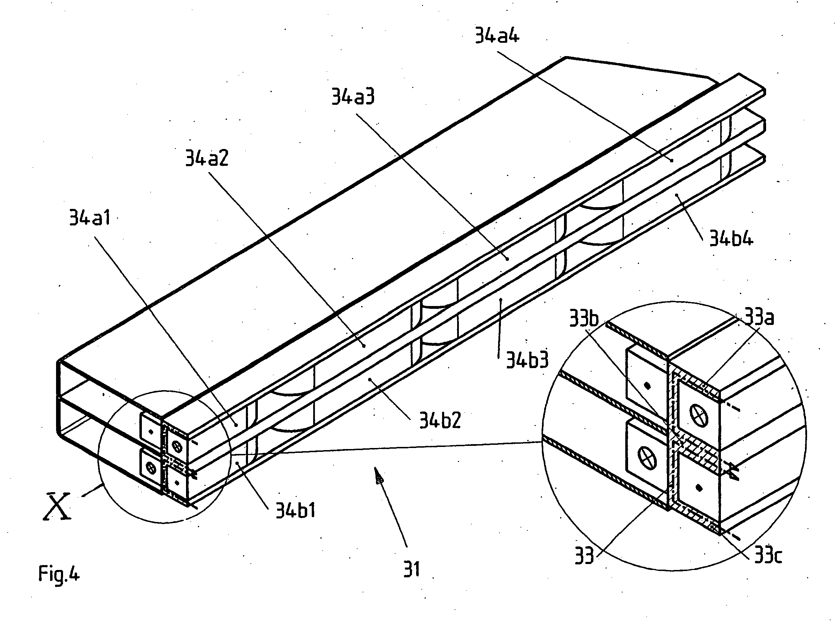

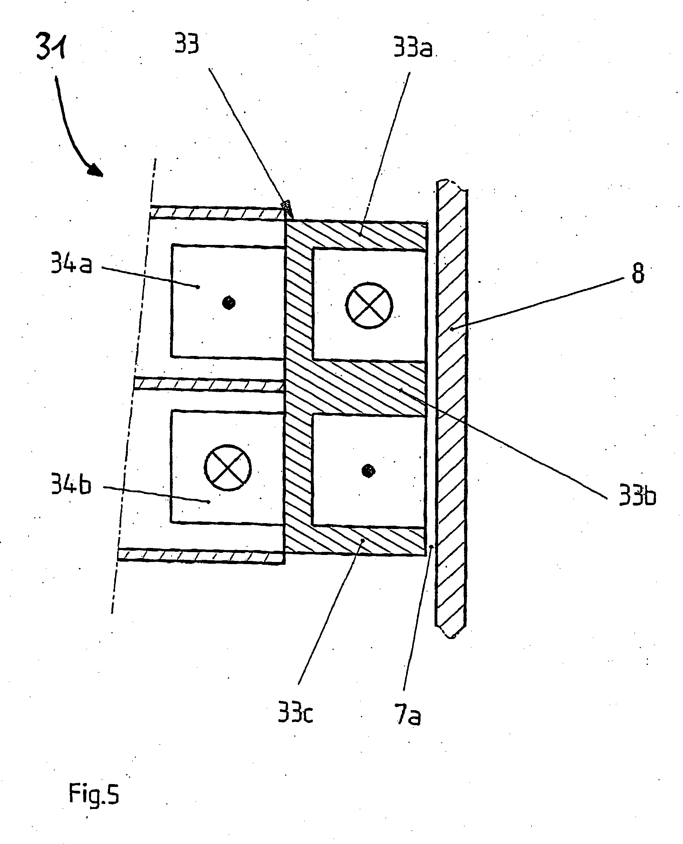

Nach Fig. 4 und 5 enthält eine erfindungsgemäße Magnetanordnung 31 eines Führmagneten vorzugsweise einen in Längs- bzw. Fahrtrichtung des Magnetschwebefahrzeugs 1 erstreckten, im Querschnitt z. B. E-förmigen Kern 33 mit drei Schenkeln 33a, 33b und 33c, deren freie Stirnflächen in einer Ebene liegen, die den Führspalt 7a zwischen der Magnetanordnung 31 und der Seitenführschiene 8 definiert. Die die Schenkel 33a, 33b bzw. 33b, 33c verbindenden Stegteile des Kerns 33 sind in zwei übereinander angeordneten Wicklungsebenen mit Wicklungen 34a und 34b umwickelt, die sich entsprechend Fig. 4 ebenfalls in Längsrichtung erstrecken. Dabei enthält die Magnetanordnung 31 in Längsrichtung jeweils vier hintereinander liegende Kerne 33 und daher in jeder Wicklungsebene vier hintereinander angeordnete Wicklungen 34a1 bis 34a4 bzw. 34b1 bis 34b4. Diese Wicklungen 34 werden analog zu Fig. 3 durch Regelkreise 18 angesteuert. Aus Redundanzgründen ist vorzugsweise jeder Wicklung 34 je ein nur in Fig. 2 gezeigter Spaltsensor 19a zugeordnet, wobei diese Spaltsensoren 19a zweckmäßig an dieselbe Ebene wie die Schenkel 33a bis 33c grenzen. Dabei ist klar, daß innerhalb der Module nach Fig. 2 jede Magnetanordnung 10a durch eine erfindungsgemäße und in Fahrzeuglängsrichtung entsprechend lang ausgebildete Magnetanordnung 31 ersetzt werden kann. Außerdem sind in Fig. 4 die entsprechend Fig. 2 anbringbaren Spaltsensoren 19a der Einfachheit halber weggelassen worden.

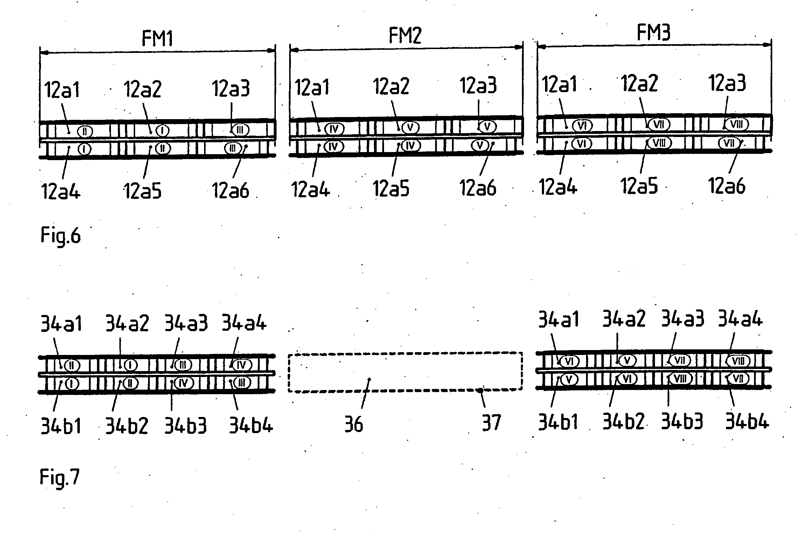

Fig. 6 zeigt grob schematisch die Regelung der Wicklungsströme bei Anwendung der bekannten Magnetanordnung 10a nach Fig. 2, bei der in zwei Ebenen je drei Wicklungen 12a1 bis 12a6 vorgesehen sind. Außerdem sind in Fig. 6 drei in Längsrichtung hintereinander angeordnete Magnetanordnungen gezeigt, die jeweils den Magnetanordnungen 10a entsprechen und die zu je einem Führmagneten FM1, FM2 bzw. FM3 gehören. Die Wicklungen sind schematisch als Kästchen dargestellt, in die jeweils römische Zahlen eingetragen sind, die die Nummern der zugehörigen Regelkreise angeben. Zwischen den verschiedenen Wicklungen liegende Spaltsensoren 19a sind in Fig. 6 jeweils schematisch durch dicke Linien begrenzt. Die Zahlen geben an, daß jeweils diejenigen Wicklungen, denen dieselbe Zahl zugeordnet ist, paarweise in Reihenschaltung miteinander verbunden und an die betreffenden Regelkreise 18 angeschlossen sind. Das bedeutet für den Führmagnet FM1, daß die Wicklungen 12a4 und 12a2 in Reihe geschaltet und an einen Regelkreis I, die Wicklungen 12a1 und 1-2a5 in Reihe geschaltet und an einen Regelkreis II und die in Reihe verbundenen Wicklungen 12a3, 12a6 an einen Regelkreis III gemäß Fig. 3 angeschlossen sind. Zu jedem Regelkreis 18 gehören außerdem je zwei, den betreffenden Wicklungen zugeordnete Spaltsensoren 19a. Eine ähnliche Verknüpfung ist für den Führmagneten FM3 vorgesehen. Beim mittleren Führmagneten FM2 sind dagegen jeweils die drei Wicklungen 12a1, 12a4 und 12a5 einerseits und die drei Wicklungen 12a2, 12a3 und 12a6 andererseits in Reihe geschaltet und an je einen Regelkreis IV bzw. V angeschlossen.

Die Anordnung nach Fig. 6 hat zur Folge, daß nur die an den äußeren Enden der beiden Führmagnete FM1 und FM3 vorhandenen Wicklungen 12a1, 12a4 bzw. 12a3, 12a6 redundant sind. Beim Ausfall des Regelkreises I bzw. der zugehörigen Wicklungen 12a2 und/oder 12a4 bleibt daher die Funktion der darüber bzw. darunter liegenden Wicklungen 12a1 und 12a5 erhalten, so daß mittels des Regelkreises II automatisch dafür gesorgt wird, daß der zugehörige Teil des Führspalts 7a konstant bleibt. An den inneren Enden der Führmagnete FM1 und FM3 ist dagegen Redundanz nur insoweit vorhanden, als beim Ausfall z. B. des Regelkreises III (oder VI) bzw. der zugehörigen Wicklungen der jeweils benachbarte, mittlere Führmagnet FM2 mit seinen Regelkreisen IV bzw. V und den zugehörigen Wicklungen die Funktion des Führmagneten FM1 bzw. FM3 mit übernehmen müßte bzw. umgekehrt.

Bei der erfindungsgemäßen Anordnung nach Fig. 7 (bzw. Fig. 4 und 5) sind dagegen pro Wicklungsebene jeweils eine gerade Anzahl von hier vier Wicklungen 34a1 bis 34b4 und zugehörige Regelkreise 18 gemäß Fig. 3 vorhanden, die hier die Nummern I bis VIII haben. Daraus folgt, daß sowohl der Führmagnet FM1 als auch der Führmagnet FM3 in sich redundant ist. Für FM1 ergeben sich vier Reihenschaltungen aus den Wicklungen 34b1, 34a2 bzw. 34a1, 34b2 bzw. 34a3, 34b4 bzw. 34b3 und 34a4, wobei die Steuerung der Wicklungspaare mittels je eines Regelkreises I bis IV und den zugehörigen Paaren von Spaltsensoren erfolgt. Fallen am äußeren oder inneren Ende des Führmagneten FM1 z. B. die Wicklungen 34a1, 34b2 bzw. 34b4, 34a3 oder die zugehörigen Regelkreise II bzw. III aus, dann wird der Ausfall durch die Wicklungspaare 34b1, 34a2 bzw. 34a4, 34b3 und die zugehörigen Regelkreise I oder IV kompensiert, so daß die Führfunktion voll erhalten bleibt. Für den Führmagneten FM3 gilt dasselbe.

Wegen der beschriebenen, erfindungsgemäßen Verteilung auf die Wicklungen und Regelkreise wird der mittlere Führmagnet FM2 in Fig. 7 im Prinzip nicht mehr benötigt, da er im Falle eines Ausfalls keine Führfunktion für die Nachbarmagnete FM1 bzw. FM3 übernehmen braucht und bei ausreichender Auslegung der Führmagnete FM1 und FM3 allenfalls ein Überangebot an Führkraft während des Normalbetriebs zur Folge hätte. Erfindungsgemäß wird daher vorgeschlagen, bei dem aus Fig. 7 ersichtlichen Führmagnetsystem den mittleren Führmagneten FM2 ganz wegzulassen und stattdessen eine Lücke 36 vorzusehen, die zweckmäßig eine der Länge der fehlenden Magnetanordnung 31 entsprechende Länge besitzt. Die entstehenden Lücken werden zweckmäßig durch zwischen den Führmagneten FM1 und FM3 angeordnete, strömungs- und schallgünstige, in Fig. 7 gestrichelt dargestellte Verkleidungen 37 abgedeckt. Im übrigen werden die Lücken 36 zweckmäßig an Stellen des Magnetschwebefahrzeugs 1 vorgesehen, an denen die geringsten Anforderungen vorliegen, d. h. z. B. zwischen den Gelenkpunkten der Schweberahmen 16 (Fig. 1).

Im übrigen zeigt Fig. 7, daß im Gegensatz zu Fig. 6 jeweils an beiden Enden der Magnetanordnungen 31 je zwei Wicklungspaare vorhanden sind, die aus je zwei in Längsrichtung unmittelbar nebeneinander, jedoch diagonal übereinander liegenden Wicklungen (z. B. 34b1, 34a2 bzw. 34a1, 34b2) gebildet sind. Zwischen diesen Wicklungspaaren können weitere Wicklungspaare vorhanden sein, wobei aus Redundanzgründen jeweils eine gerade Zahl von zusätzlichen Wicklungspaaren bevorzugt wird, die wie die Wicklungspaare an den Enden in sich redundant sind.

Zwei dadurch erhaltene Vorteile der erfindungsgemäßen Anordnung ergeben sich aus einem Vergleich der Fig. 6 und 7. Zunächst folgt aus Fig. 6, daß z. B. beim Ausfall des Regelkreises III oder IV ein Rollmoment um die Fahrzeuglängsachse auftreten kann, weil die verbleibenden, mit den Wicklungen 12a2, 12a3 und 12a6 bzw. 12a1, 12a4 und 12a5 versehenen Magnetpole in den beiden Wicklungsebenen unsymmetrisch angeordnet sind. Bei der Anordnung der Fig. 7 dagegen treten derartige Unsymmetrien beim Ausfall irgendeines Spulenpaars oder zugehörigen Reglers I bis VIII nicht auf. Ähnliches gilt für die Lage der mittleren Kraftangriffspunkte. Fällt z. B. in Fig. 6 der Regelkreis III aus, dann verschiebt sich der Kraftangriffspunkt des Führmagneten FM1 in Fig. 6 nach links. Bei der Anordnung nach Fig. 7 würde dagegen beim Ausfall des Regelkreises III keine wesentliche Änderung eintreten, insbesondere wenn der auf die ausgefallenen Magnetpole entfallende Kraftanteil durch Erhöhung der Wicklungsströme in den zum Regelkreis IV gehörenden Magnetpolen nahezu vollständig kompensiert wird.

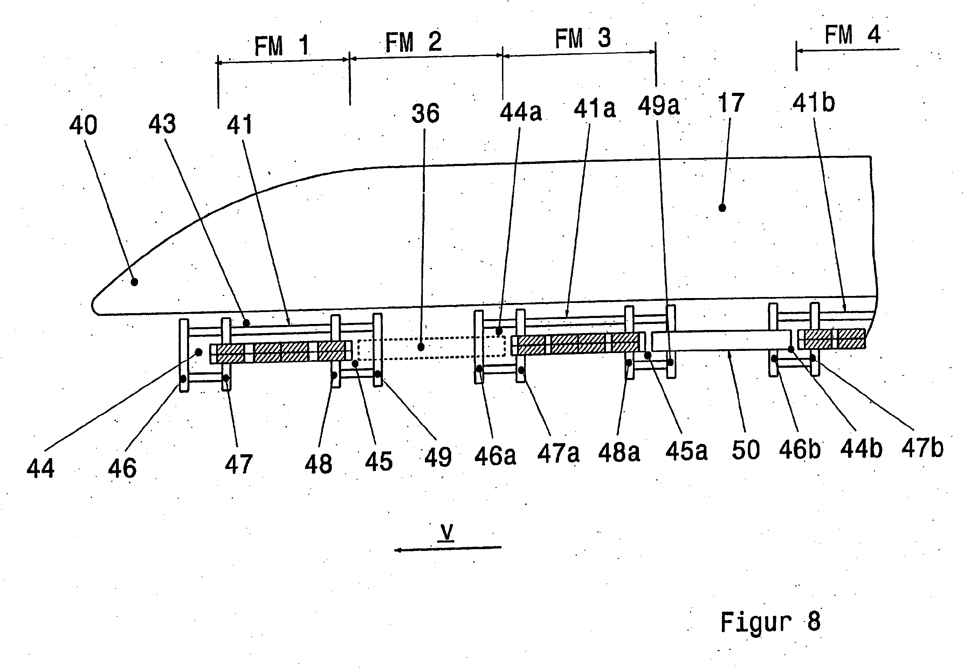

Für das Ausführungsbeispiel nach Fig. 7 ergibt sich bei der praktischen Anwendung etwa die in Fig. 8 dargestellte Anordnung. Dabei ist die Fahrtrichtung des Magnetschwebefahrzeugs 1 durch einen Pfeil v und sein Vorderende bzw. Bugbereich mit dem Bezugszeichen 40 versehen. Weiter sind grob schematisch einige Schwebegestellabschnitte 41, 41a, 41b des Schwebegestells 16 (Fig. 1) gezeigt, die in Längsrichtung des Fahrzeugs 1 hintereinander angeordnet und über nicht dargestellte Luftfedern an den Wagenkasten 17 des Magnetschwebefahrzeugs 1 angekoppelt sind. Die Schwebegestellabschnitte 41, 41a, 41b weisen in Längsrichtung beabstandete, durch Längsträger 43 verbundene Abstützelemente 44, 45 in Form Rahmenteilen auf, die mit je einem vorderen und hinteren Abstützteil 46, 47 bzw. 48, 49 versehen sind. Dabei ist im Ausführungsbeispiel der in Fahrtrichtung vorderste Führmagnet FM1 so mit dem Schwebegestellabschnitt 41 verbunden, daß sein Vorderende am hinteren Abstützsteil 47 des vorderen Abstützelements 44 und sein Hinterende mit dem vorderen Abstützteil 48 des hinteren Abstützelements 45 gelenkig verbunden ist, wie Fig. 8 deutlich zeigt. Der nächste Führmagnet FM2 ist normalerweise an seinem Vorderende mit dem hinteren Abstützteil 49 des hinteren Abstützelements 45 des Schwebegestellabschnitts 41 und an seinem Hinterende mit dem vorderen Abstützteil 46a des vorderen Abstützelements 41a des in Fahrtrichtung nachfolgenden Schwebegestellabschnitts 41a verbunden. Der dritte Führmagnet FM3 ist analog zum ersten Führmagnet FM1 mit dem Schwebegestellabschnitt 41a bzw. dem auf diesen folgenden Schwebegestellabschnitt 41b usw. verbunden. Die beschriebene Anordnung kann längs des gesamten Magnetschwebefahrzeugs 1 vom Bug bis zum Heck fortgesetzt werden. Vorzugsweise ist jedoch nach dem dritten Führmagneten FM3 längs eines Abschnitts, der der Länge eines Führmagneten entspricht, ein Bremsmagnet 50 eingebaut, der eine vom Führmagneten freie Zone bildet und z. B. ein Bestandteil einer ebenfalls mit der Führschiene 8 wechselwirkenden Wirbelstrombremse ist. An dieser Stelle fehlt somit die Ankopplung z. B. des Führmagneten FM3 am hinteren Abstützteil 49a des Abstützelements 45a in derselben Weise, wie im Bugbereich 40 das vordere Abstützteil 46 des vorderen Abstützelements 44 nicht an einen Führmagneten gekoppelt ist, da auf den Führmagneten FM1 - in Fahrtrichtung betrachtet - ebenfalls eine führmagnetfreie Zone folgt. Auf der in Fig. 8 rechten, d. h. in Fahrtrichtung hinter dem Bremsmagneten 50 liegenden Seite ist die Anordnung entsprechend. Außerdem ist klar, daß in Fig. 8 nur die eine, in Fahrtrichtung linke Seite des Magnetschwebefahrzeugs 1 dargestellt ist und auf der in Fig. 8 nicht sichtbaren, rechten Seite entsprechende Führmagnete und ggf. weitere Bremsmagnete vorhanden sind.

Abgesehen davon zeigt Fig. 8, daß der Führmagnet FM2 entsprechend der obigen Beschreibung fehlt, so daß dort wie in Fig. 7 die Lücke 36 entsteht. Dasselbe gilt für den in Fig. 8 rechts vom Bremsmagneten 50 liegenden Fahrzeugabschnitt. Das Fehlen des Führmagneten FM2 oder entsprechender anderer Führmagnete kann z. B. immer dann nützlich sein, wenn ein Führmagnet gemäß Fig. 8 zwischen zwei Schwebegestellabschnitten 41, 41a oder anderen Fahrzeugabschnitten zu liegen kommt, in denen geringere Anforderungen an die von den Führmagneten aufzubringenden Kräfte gestellt sind. Der Führmagnet FM2 würde daher in diesem Bereich nur zu einem an sich nicht erforderlichen Überangebot an Wicklungen führen. Durch des Weglassen des Führmagneten FM2 wird keine nennenswerte Beeinträchtigung der Führungseigenschaften erzielt. Vorteilhaft ist jedoch, daß bei der aus Fig. 8 ersichtlichen Anordnung etwa ein Drittel des für die Führmagnete benötigten, hauptsächlich durch deren Eisenanteile bedingten Gewichts eingespart wird.

Ein aus der Anordnung nach Fig. 8 resultierendes Problem besteht darin, daß sich eine ungleichförmige Krafteinleitung in das Schwebegestell 16 (Fig. 1) ergibt. Dadurch entstehen Giermomente, die zwar vom Schwebegestell 16 und dem Wagenkasten 17 bzw. dem Fahrweg (Fig. 1) aufgefangen werden, aber dennoch unerwünscht sein können. Bei einem Magnetschwebefahrzeug 1 mit einem mittleren Bremsmagneten 50 und je drei davor bzw. dahinter angeordneten Führmagneten FM1 bis FM3 würden sich beim Fehlen der jeweils mittleren Führmagnete insgesamt acht Lastwechsel ergeben, und zwar an den Enden des Magnetschwebefahrzeugs 1 je zwei, an jeder Lücke 36 je zwei und im Bereich des Bremsmagneten 50 ebenfalls je zwei. Das ist insbesondere bei schnell fahrenden Magnetschwebefahrzeugen 1 wegen der dadurch auf den Fahrweg 3 ausgeübten Kräfte unerwünscht.

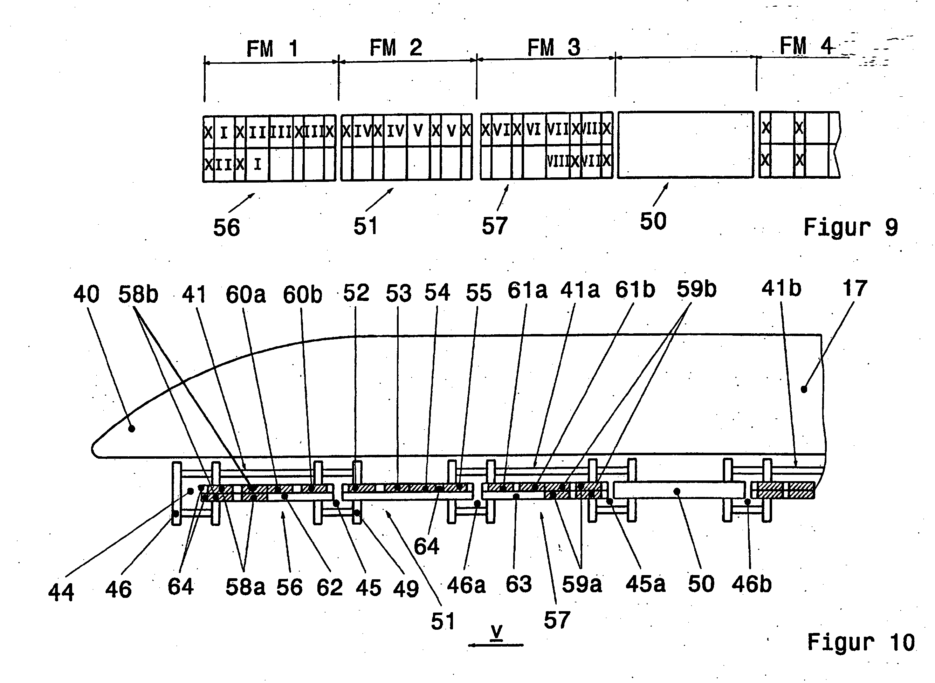

Nach einem weiteren, in Fig. 9 und 10 dargestellten Ausführungsbeispiel der Erfindung wird daher in der Lücke 36 nach Fig. 7 und 8 wiederum ein Führmagnet FM2 vorgesehen. Um dennoch eine Gewichtseinsparung wie in Fig. 7 und 8 zu ermöglichen, wird eine Magnetanordnung 51 dieses Führmagneten FM2 mit insgesamt nur vier hintereinander liegenden Wicklungen 52 bis 55 versehen, die zweckmäßig in einer und derselben Wicklungsebene liegen. Die Enden des Führmagneten FM2 sind mit den Abstützteilen 49 bzw. 46a verbunden (Fig. 10), die beim Ausführungsbeispiel nach Fig. 8 frei geblieben waren. Außerdem werden in Magnetanordnungen 56, 57 der angrenzenden beiden Führmagnete FM1 und FM3 im Vergleich zu Fig. 7 und 8 jeweils zwei Wicklungen weggelassen. Die Magnetanordnungen 56, 57 weisen an ersten, vom Führmagneten FM2 entfernten Enden wie in Fig. 7 je zwei Paare von Wicklungen 58a, 58b bzw. 59a, 59b, an dem Führmagneten FM2 zugewandten zweiten Enden dagegen zwei in derselben oder in unterschiedlichen Ebenen, jedoch hintereinander liegende Wicklungen 60a, 60b bzw. 61a, 61b und im übrigen je zwei Leerstellen 62 bzw. 63 auf. Die Wicklungen 60a, 60b bzw. 61a, 61b bilden jeweils dritte Wicklungspaare der Magnetanordnungen 56 bzw. 57 und sind seriell an je einen zugeordneten Regelkreis III bzw. VI angeschlossen. In ähnlicher Weise sind je zwei hintereinander angeordnete Wicklungen 52, 53 bzw. 54, 55 des Führmagneten FM2 paarweise und in Reihenschaltung an je einen Regelkreis IV bzw. V angeschlossen. Dadurch wird der Vorteil erzielt, daß an besonders exponierten, durch magnetfreie Zonen gekennzeichneten Bereichen, hier z. B. den an das Vorderende 40 bzw. den Bremsmagneten 50 des Fahrzeugs 1 grenzenden Bereichen, analog zu Fig. 7 und 8 je zwei über Kreuz verbundene Wicklungspaare zu einer Redundanz des Systems in sich selbst führen. In allen weniger exponierten, dazwischen liegenden Bereichen muß wie in Fig. 6 beim Ausfall eines des Wicklungspaares (z. B. 60a, 60b) bzw. des zugehörigen Regelkreises das jeweils benachbarte Wicklungspaar (z. B. 52, 53) und umgekehrt für die erforderliche Magnetkraft sorgen. Die zugehörige schematische Darstellung analog zu Fig. 6 und 7 findet sich in Fig. 10, wobei die zugehörigen Spaltsensoren in Fig. 9 jeweils durch ein X und in Fig. 10 durch Leerstellen 64 angedeutet sind.

Das Ausführungsbeispiel nach Fig. 9 und 10 bringt zwei wesentliche Vorteile mit sich. Zum einen wird die Zahl der Lastwechsel pro Fahrzeug 1 um vier reduziert, während das Gewicht der Führmagnete wie in Fig. 8 um etwa ein Drittel verringert ist, da nur noch 16 anstelle der 24 Wicklungen vorhanden sind, die beim Ausführungsbeispiel von Fig. 7 vorhanden wären, wenn dort die Lücke 36 durch einen vollständigen Führmagneten FM2 ausgefüllt würde. Dabei ist beachtlich, daß Lastwechsel im Hinblick auf die Betriebsfestigkeit des Fahrwegs 3 bei Übergängen von maximaler Last auf Null-Last weitaus kritischer als bei Übergängen von maximaler Last auf halbe Last bzw. reduzierte Last sind, da bei den letzteren die Vorspannung im Prinzip durchgehend erhalten bleibt. Die zuletzt genannten Lastwechsel bleiben daher bei dieser Betrachtung unberücksichtigt. Dabei ist klar, daß zwischen den beiden Magnetanordnungen 56, 57 auch zwei oder mehr dritte Magnetanordnungen 51 vorhanden sein können.

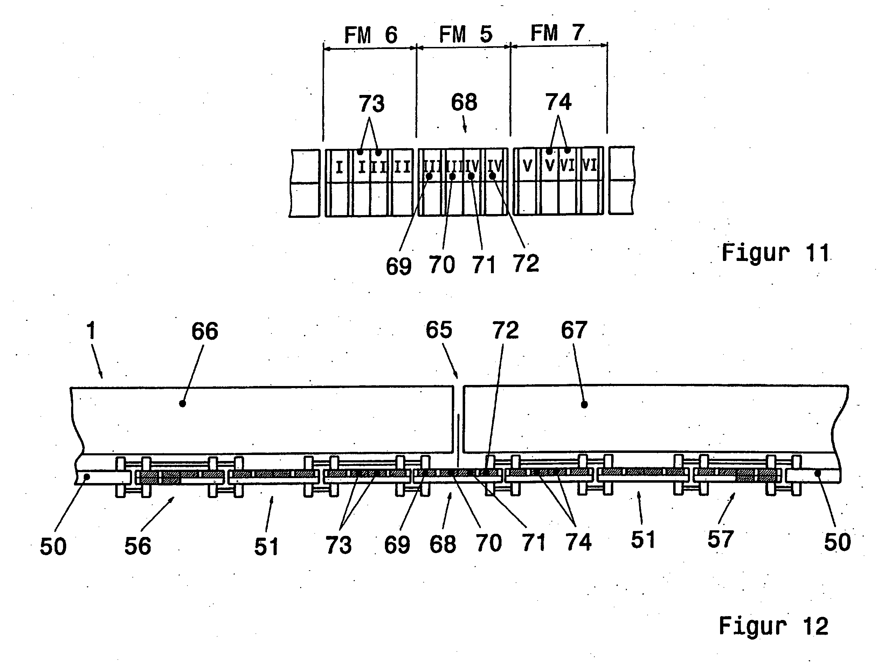

Fig. 11 und 12 zeigen schließlich ein derzeit für am besten gehaltenes Ausführungsbeispiel der Erfindung. Es ist hier berücksichtigt, daß Übergangsbereiche 65 zwischen zwei hintereinander herlaufenden, aneinander gekoppelten Sektionen 66, 67 eines Magnetschwebefahrzeugs 1 ebenfalls führmagnetfreie Zonen bilden, die zu kritischen Lastwechseln führen. Aus Gründen der Redundanz werden diese Übergangsbereiche 65 bei Anwendung der Ausführungsbeispiele nach Fig. 7 bis 10 normalerweise genauso wie die an den Bugbereich 40 bzw. an einen Bremsmagneten 50 grenzende Bereiche als magnetfreie Zonen behandelt, d. h. es werden dort je zwei diagonal verbundene Wicklungspaare (z. B. 58 bzw. 59 in Fig. 9) vorgesehen. Beim Ausführungsbeispiel nach Fig. 11 und 12 wird dagegen vorgeschlagen, in den Übergangsbereichen 65 jeweils einen Führmagneten FM5 mit einer Magnetanordnung 68 vorzusehen, die wie die Magnetanordnung 51 (Fig. 9) vier hintereinander liegende Wicklungen 69 bis 72 aufweist. Dabei sind je zwei Wicklungen, z. B. 69 und 70, am Hinterende der einen Sektion 66 und die beiden anderen Wicklungen, z. B. 71 und 72, am Vorderende der nächsten Sektion 67 und z. B. sämtlich in derselben Wicklungsebene angeordnet. Außerdem ist ein an das Hinterende der vorlaufenden Sektion 66 grenzender Führmagnet FM6 und ein an das Vorderende der nachlaufenden Sektion 67 grenzender Führmagnet FM7 mit Magnetanordnungen 73 bzw. 74 versehen, die ebenfalls lediglich aus vier hintereinander liegenden, vorzugsweise in derselben Wicklungsebene angeordneten Wicklungen aufgebaut, entsprechend Fig. 11 paarweise verbunden und an zugeordnete Regelkreise angeschlossen sind. Dadurch wird ohne Gewichtsvergrößerung gegenüber Fig. 9 und 10 erreicht, daß zwischen je zwei bisher magnetfreien Zonen jeweils ein durchlaufendes, ununterbrochenes Band von Wicklungen bzw. ein durchlaufendes magnetisches Flußband vorhanden ist. In diesem Band liegen die Wicklungen einzeln hintereinander mit der Folge, daß ein ständiger Abriß und Neuaufbau des magnetischen Flusses vermieden wird und sich zu beachtende Lastwechsel und Momente nur noch dort ergeben können, wo magnetfreie Zonen unumgänglich sind, wie dies für den Anfang oder das Ende eines Magnetschwebefahrzeugs oder die Bremsmagnete gilt. Dabei ist klar, daß die in Fig. 9 und 10 für den Bugbereich 40 beschriebene Anordnung auch im Heckbereich vorgesehen sein kann, insbesondere wenn das Magnetschwebefahrzeug 1 symmetrisch zur Fahrzeugmitte und zur Fortbewegung in zwei entgegengesetzte Richtungen ausgebildet ist. Außerdem ergibt sich der Vorteil, daß nahezu alle Abstützteile der Schwebegestellabschnitte 41, 41a usw. mit je einer Magnetanordnung verbunden sind.

Bei einem besonders bevorzugten Ausführungsbeispiel der Erfindung sind die am Bug oder Heck des Magnetschwebefahrzeugs 1 vorhandenen Wicklungen und Kerne, z. B. 34 und 33 in Fig. 4, länger als in anderen Bereichen des Magnetschwebefahrzeugs 1 ausgebildet. Dadurch wird dem Umstand Rechnung getragen, daß dort je nach Fahrtrichtung bei Kurvenfahrten ein erhöhter Bedarf an Führkräften besteht.

Die Erfindung ist nicht auf das beschriebene Ausführungsbeispiel beschränkt, das auf vielfache Weise abgewandelt werden kann. Das gilt insbesondere für die beschriebene Form der Kerne und Wicklungen der Magnetanordnungen und für die übrige Ausbildung der Führmagnete. Weiter können zusätzlich zu den beschriebenen Magnetanordnungen weitere und/oder anders ausgebildete Magnetanordnungen vorgesehen sein, sofern sie die beschriebenen Funktionen des Führmagnetsystems nicht wesentlich beeinträchtigen. Hierfür ist es prinzipiell ausreichend, wenn jede Magnetanordnung nur mit den beschriebenen Wicklungen versehen ist. Die in Fahrzeuglängsrichtung gemessene Länge der Magnetanordnungen ist dabei entsprechend einer vorgegebenen Rasterlänge zweckmäßig überall gleich. Außerdem versteht sich, daß die verschiedenen Merkmale auch in anderen als den beschriebenen und dargestellten Kombinationen angewendet werden können.

## Patentansprüche

1. Führmagnetsystem für ein Magnetschwebefahrzeug (1) mit wenigstens einer Magnetanordnung (31, 56, 57), die zwischen einem ersten und einem zweiten Ende einen in einer Fahrzeuglängsrichtung erstreckten Kern (33) mit wenigstens zwei übereinander angeordneten Wicklungsebenen für eine Mehrzahl von Wicklungen (34, 58 bis 61) aufweist, wobei die Magnetanordnung (31, 56, 57) an dem ersten Ende in wenigstens zwei der Wicklungsebenen mit je zwei hintereinander liegenden Wicklungen (34, 58 bis 61) derart versehen ist, daß zwei in Fahrzeuglängsrichtung hintereinander und diagonal übereinander liegende, elektrisch in Reihe geschaltete Wicklungen je ein erstes bzw. zweites, an je einen zugeordneten Regelkreis (18) angeschlossenes Wicklungspaar (z. B. 58a, 58b bzw. 59a, 59b) bilden, **dadurch gekennzeichnet, daß** die Magnetanordnung (31, 56, 57) an dem zweiten Ende wenigstens zwei in der Fahrzeuglängsrichtung hintereinander liegende, elektrisch in Reihe geschaltete Wicklungen aufweist, die ein drittes Wicklungspaar (z. B. 60a, 60b bzw. 61a, 61b) bilden, das an einen weiteren zugeordneten Regelkreis (18) angeschlossen ist.

2. Führmagnetsystem nach Anspruch 1, **dadurch gekennzeichnet, daß** es wenigstens zwei derartige Magnetanordnungen (56, 57) aufweist, die an je eine führmagnetfreie Zone (z. B. 50) grenzen und mit ihren zweiten Enden einander zugewandt sind, und daß zwischen diesen beiden Magnetanordnungen (56, 57) wenigstens eine dritte Magnetanordnung (51) vorgesehen ist, die wenigstens je vier in Fahrzeuglängsrichtung hintereinander liegende Wicklungen (52 bis 55) aufweist, wobei je zwei unmittelbar hintereinander liegende Wicklungen (52, 53 bzw. 54, 55) elektrisch in Reihe geschaltet und an je einen weiteren zugeordneten Regelkreis (18) angeschlossen sind.

3. Führmagnetsystem nach Anspruch 1, **dadurch gekennzeichnet, daß** die Magnetanordnungen (31) an dem zweiten Ende in wenigstens zwei der Wicklungsebenen mit je zwei hintereinander liegenden Wicklungen (34a3, 34a4 bzw. 34b3, 34b4) derart versehen ist, daß zwei in Fahrzeuglängsrichtung hintereinander und diagonal übereinander liegende Wicklungen elektrisch in Reihe geschaltet sind und je ein an einen weiteren zugeordneten Regelkreis (18) angeschlossenes Wicklungspaar (z. B. 34a3, 34b4 bzw. 34a4, 34b3) bilden.

4. Führmagnetsystem nach Anspruch 3, **dadurch gekennzeichnet, daß** in Fahrzeuglängsrichtung eine Mehrzahl der Magnetanordnungen (31) derart hintereinander angeordnet ist, daß zwischen ausgewählten Magnetanordnungen (31) eine Lücke (36) besteht.

5. Führmagnetsystem nach Anspruch 4, **dadurch gekennzeichnet, daß** die Lücke (36) eine der Länge der Magnetanordnungen (31) entsprechende Länge aufweist.

6. Führmagnetsystem nach Anspruch 4 oder 5, **dadurch gekennzeichnet, daß** die Lücken (36) durch Verkleidungsteile (37) abgedeckt sind.

7. Magnetschwebefahrzeug mit einem wenigstens eine Magnetanordnung (31, 56, 57) aufweisenden Führmagnetsystem, **dadurch gekennzeichnet, daß** das Führmagnetsystem nach wenigstens einem der Ansprüche 1 bis 6 ausgebildet ist.

8. Magnetschwebefahrzeug nach Anspruch 7, **dadurch gekennzeichnet, daß** es in einem mittleren Bereich wenigstens eine führmagnetfreie Zone (50) aufweist und zwischen dieser Zone (50) und je einem eine weitere führmagnetfreie Zone bildenden Bug- und/oder Heckbereich (40) ausschließlich Magnetanordnungen (51, 56, 57) nach Anspruch 2 vorgesehen sind.

9. Magnetschwebefahrzeug nach Anspruch 7, **dadurch gekennzeichnet, daß** es in einem mittleren Bereich eine führmagnetfreie Zone (50) aufweist und zwischen dieser Zone (50) und je einem eine weitere führmagnetfreie Zone bildenden Bug- und/oder Heckbereich (40) ausschließlich Magnetanordnungen (31) nach einem der Ansprüche 3 bis 6 vorgesehen sind.

10. Magnetschwebefahrzeug nach Anspruch 8 oder 9, **dadurch gekennzeichnet, daß** die führmagnetfreien Zonen (50) durch zwischengeschaltete Bremsmagnete gebildet sind.

11. Magnetschwebefahrzeug nach einem der Ansprüche 7 bis 10, **dadurch gekennzeichnet, daß** es wenigstens zwei in Fahrzeuglängsrichtung hintereinander angeordnete Sektionen (66, 67) enthält, wobei Übergangsbereiche (65) zwischen den Sektionen (66, 67) je eine weitere führmagnetfreie Zone bilden.

12. Magnetschwebefahrzeug nach Anspruch 11, **dadurch gekennzeichnet, daß** in den Übergangsbereichen (65) zwischen zwei Sektionen (66, 67) jeweils eine wie die dritte Magnetanordnung (51) nach Anspruch 2 ausgebildete Magnetanordnung (68) vorgesehen ist, die wenigstens vier in Fahrzeuglängsrichtung hintereinander angeordnete Wicklungen (69 bis 72) enthält.

13. Magnetschwebefahrzeug nach Anspruch 12, **dadurch gekennzeichnet, daß** es als führmagnetfreie Zonen nur die Bug- und/oder Heckbereiche (40) und ggf. dazwischen angeordnete Bremsmagnete (50) enthält, wobei an die führmagnetfreien Zonen Magnetanordnungen (56, 57) nach Anspruch 1 grenzen, während zwischen den Magnetanordnungen (56, 57) einschließlich der Übergangsbereiche (65) zwischen den Sektionen (66, 67) nur den dritten Magnetanordnungen (51) entsprechende Magnetanordnungen (68) vorgesehen sind.

14. Magnetschwebefahrzeug nach Anspruch 12 oder 13, **dadurch gekennzeichnet, daß** die Magnetanordnungen (56, 68, 57) zwischen den Bug- und/oder Heckbereichen (40) ein über die Fahrzeuglänge durchgehendes Magnetflußband bilden, das allenfalls durch die Bremsmagnete (50) unterbrochen ist.

15. Magnetschwebefahrzeug nach einem der Ansprüche 7 bis 14, **dadurch gekennzeichnet, daß** die an den Bug- und/oder Heckbereich (40) grenzenden Magnetanordnungen (31, 56, 57) im Vergleich zu den anderen Magnetanordnungen mit in Fahrzeuglängsrichtung verlängerten Wicklungen und Kernen versehen sind.

## Claims

1. A guiding magnet system for a magnetic levitation vehicle (1), comprising at least one magnet arrangement (31, 56, 57) which, between a first end and a second end, has a core (33) which extends in a longitudinal direction of the vehicle and which has at least two winding levels arranged one above the other for a plurality of windings (34, 58 to 61), wherein the magnet arrangement (31, 56, 57) at the first end is provided in at least two of the winding levels with in each case two windings (34, 58 to 61) arranged one behind the other in such a manner that two windings which are arranged one behind the other in the longitudinal direction of the vehicle and diagonally one above the other, and which are electrically connected in series, form in each case a first and, respectively, a second pair of windings (e.g. 58a, 58b, and 59a, 59b, respectively), which are connected in each case to an associated control circuit (18), **characterized in that** the magnet arrangement (31, 56, 57) at the second end has at least two windings which are arranged one behind the other in the longitudinal direction of the vehicle and which are electrically connected in series and which form a third pair of windings (e.g. 60a, 60b and 61 a, 61 b, respectively) which is connected to a further associated control circuit (18).

2. The guiding magnet system according to claim 1, **characterized in that** it has at least two such magnet arrangements (56, 67) which adjoin in each case one guiding-magnet-free zone (e.g. 50) and which face one another with their second ends, and that between these two magnet arrangements (56, 57), at least one third magnet arrangement (51) is provided which has at least in each case four windings (52 to 55) arranged one behind the other in the longitudinal direction of the vehicle, wherein in each case two windings (52, 53 and 54, 55, respectively) arranged one behind the other are electrically connected in series and are connected in each case to a further associated control circuit (18).

3. The guiding magnet system according to claim 1, **characterized in that** the magnet arrangement (31) at the second end is provided in at least two of the winding levels with in each case two windings (34a3, 34a4 and 34b3, 34b4, respectively) arranged one behind the other in such a manner that two windings which are arranged one behind the other in the longitudinal direction of the vehicle and diagonally one above the other are electrically connected in series and form in each case a pair of windings (e.g. 34a3, 34b4 and 34a4, 34b3, respectively) which is connected to a further associated control circuit (18).

4. The guiding magnet system according to claim 3, **characterized in that** in the longitudinal direction of the vehicle, a plurality of the magnet arrangements (31) is arranged one behind the other in such a manner that there is a gap (36) between selected magnet arrangements (31).

5. The guiding magnet system according to claim 4, **characterized in that** the gap (36) has a length which corresponds to the length of the magnet arrangements (31).

6. The guiding magnet system according to claim 4 or claim 5, **characterized in that** the gaps (36) are covered by casing parts (37).

7. A magnetic levitation vehicle with a guiding magnet system having at least one magnet arrangement (31, 56, 57), **characterized in that** the guiding magnet system is designed according to at least one of the claims 1 to 6.

8. The magnetic levitation vehicle according to claim 7, **characterized in that** in a middle region, said vehicle has at least one guiding-magnet-free zone (50), and that between this zone (50) and in each case one nose section and/or tail section (40) forming a further guiding-magnet-free zone, exclusively magnet arrangements (51, 56, 57) according to claim 2 are provided.

9. The magnetic levitation vehicle according to claim 7, **characterized in that** in a middle region, said vehicle has a guiding-magnet-free zone (50), and that between this zone (50) and in each case one nose section and/or tail section (40) forming a further guiding-magnet-free zone, exclusively magnet arrangements (31) according to any one of the claims 3 to 6 are provided.

10. The magnetic levitation vehicle according to claim 8 or claim 9, **characterized in that** the guiding-magnet-free zones (50) are formed by interposed brake magnets.

11. The magnetic levitation vehicle according to any one of the claims 7 to 10, **characterized in that** it includes at least two sections (66, 67) arranged one behind the other in the longitudinal direction of the vehicle, wherein transition areas (65) between the sections (66, 67) form in each case a further guiding-magnet-free zone.

12. The magnetic levitation vehicle according to claim 11, **characterized in that** in the transition areas (65) between two sections (66, 67), in each case a magnet arrangement (68) is provided which is designed like the third magnet arrangement (51) according to claim 2 and which includes at least four windings (69 to 72) arranged one behind the other in the longitudinal direction of the vehicle.

13. The magnetic levitation vehicle according to claim 12, **characterized in that** it includes as guiding-magnet-free zones only the nose sections and/or tail sections (40) and, optionally, brake magnets (50) arranged there between, wherein magnet arrangements (56, 57) according to claim 1 adjoin the guiding-magnet-free zones, whereas between the magnet arrangements (56, 57) including the transition areas (65) between the sections (66, 67), only magnet arrangements (68) corresponding to the third magnet arrangements (51) are provided.

14. The magnetic levitation vehicle according to claim 12 or claim 13, **characterized in that** the magnet arrangements (56, 68, 57) between the nose sections and/or tail sections (40) form a magnetic flux band which extends continuously over the length of the vehicle and which, if need be, is interrupted by the brake magnets (50).

15. The magnetic levitation vehicle according to any one of the claims 7 to 14, **characterized in that** compared to the other magnet arrangements, the magnet arrangements (31, 56, 57) adjoining the nose section and/or the tail section (40) are provided with windings and cores which are extended in the longitudinal direction of the vehicle.

## Revendications

1. Système de guidage magnétique pour un véhicule en sustentation magnétique (1) avec au moins une structure magnétique (31, 56, 57) qui présente, entre une première et une deuxième extrémité, un noyau (33) étendu dans un sens longitudinal du véhicule avec au moins deux plans d'enroulement disposés l'un au-dessus de l'autre pour une pluralité d'enroulements (34, 58 à 61), pour lequel la structure magnétique (31, 56, 57) est, à la première extrémité dans au moins deux des plans d'enroulement, munie chaque fois de deux enroulements (34, 58 à 61) situés l'un derrière l'autre de telle sorte que deux enroulements connectés électriquement en série se trouvant l'un derrière l'autre dans le sens longitudinal du véhicule et en diagonale l'un au-dessus de l'autre, forment chacun une première ou une deuxième paire d'enroulements (par ex. : 58a, 58b ou 59a, 59b) connectée chacune à un circuit de régulation (18) attribué **caractérisé en ce que** la structure magnétique (31, 56, 57) comporte sur la deuxième extrémité, au moins deux enroulements connectés électriquement en série se trouvant l'un derrière l'autre dans le sens longitudinal du véhicule qui forment une troisième paire d'enroulements (par ex. : 60a, 60b ou 61 a, 61 b) qui est connectée à un autre circuit de régulation (18) attribué.

2. Système de guidage magnétique selon la revendication 1 **caractérisé en ce qu'**il présente au moins deux structures magnétiques (56, 57) de ce type qui sont contiguës à chaque zone dépourvue d'aimant de guidage (par ex. : 50) et sont tournées l'une vers l'autre avec leurs deuxièmes extrémités et **en ce qu'**entre ces deux structures magnétiques (56, 57), est au moins prévue une troisième structure magnétique (51) qui présente au moins quatre enroulements (52 à 55) situés l'un derrière l'autre dans le sens longitudinal du véhicule pour lequel deux enroulements (52, 53 ou 54, 55) situés directement l'un derrière l'autre sont chacun connectés électriquement en série et sont raccordés chacun à un autre circuit de régulation (18) attribué.

3. Système de guidage magnétique selon la revendication 1 **caractérisé en ce que** les structures magnétiques (31) sont, à la deuxième extrémité dans au moins deux des plans d'enroulement, munies chacune de deux enroulements (34a3, 34a4 ou 34b3, 34b4), situés l'un derrière l'autre de telle sorte que deux enroulements situés l'un derrière l'autre dans le sens longitudinal du véhicule et en diagonale l'un au-dessus de l'autre sont électriquement connectés en série et forment chacun une paire d'enroulements (par ex. : 34a3, 34b4 ou 34a4, 34b3) raccordée à un autre circuit de régulation (18) attribué.

4. Système de guidage magnétique selon la revendication 3 **caractérisé en ce que** dans le sens longitudinal du véhicule un grand nombre des structures magnétiques (31) sont disposées l'une derrière l'autre de telle sorte qu'il y a un vide (36) entre les structures magnétiques (31) sélectionnées.

5. Système de guidage magnétique selon la revendication 4 **caractérisé en ce que** le vide (36) présente une longueur correspondant à la longueur des structures magnétiques (31).

6. Système de guidage magnétique selon la revendication 4 ou 5 **caractérisé en ce que** les vides (36) sont couverts par des pièces de revêtement (37).

7. Véhicule en sustentation magnétique avec au moins un système de guidage magnétique présentant une structure magnétique (31, 56, 57) **caractérisé en ce que** le système de guidage magnétique est constitué au moins selon une des revendications 1 à 6.

8. Véhicule en sustentation magnétique selon la revendication 7 **caractérisé en ce que** dans une zone centrale, il présente au moins une zone (50) dépourvue d'aimant de guidage et **en ce qu'**entre cette zone (50) et chaque zone avant et/ou arrière (40) formant une autre zone dépourvue d'aimant de guidage sont exclusivement prévues des structures magnétiques (51, 56, 57) selon la revendication 2.

9. Véhicule en sustentation magnétique selon la revendication 7 **caractérisé en ce qu'**il présente dans une zone centrale une zone (50) dépourvue d'aimant de guidage et **en ce qu'**entre cette zone (50) et chaque zone avant et/ou arrière (40) formant une autre zone dépourvue d'aimant de guidage sont exclusivement prévues des structures magnétiques (31) selon une des revendications 3 à 6.

10. Véhicule en sustentation magnétique selon la revendication 8 ou 9 **caractérisé en ce que** les zones (50) dépourvues d'aimant de guidage sont constituées par des aimants de freinage interconnectés.

11. Véhicule en sustentation magnétique selon une des revendications 7 à 10 **caractérisé en ce qu'**il contient au moins deux sections (66, 67) disposées l'une derrière l'autre dans le sens longitudinal du véhicule, pour lequel des zones de transition (65) entre les sections (66, 67) forment chacune une autre zone dépourvue d'aimant de guidage.

12. Véhicule en sustentation magnétique selon la revendication 11 **caractérisé en ce que** dans les zones de transition (65) entre les deux sections (66, 67) est à chaque fois prévue une structure magnétique (68) constituée comme la troisième structure magnétique (51) selon la revendication 2 qui contient au moins quatre enroulements (69 à 72) disposés l'un derrière l'autre dans le sens longitudinal du véhicule.

13. Véhicule en sustentation magnétique selon la revendication 12 **caractérisé en ce qu'**il ne contient, comme zones dépourvues d'aimant de guidage, que les zones avant et/ou arrière (40) et le cas échéant des aimants de freinage (50) disposés entre celles-ci, pour lequel les structures magnétiques (56, 57) sont contiguës aux zones dépourvues d'aimant de guidage selon la revendication 1 alors qu'entre les structures magnétiques (56, 57) y compris les zones de transition (65) entre les sections (66, 67) sont seulement prévues les structures magnétiques (68) correspondant aux troisièmes structures magnétiques (51).

14. Véhicule en sustentation magnétique selon la revendication 12 ou 13 **caractérisé en ce que** les structures magnétiques (56, 68, 57) entre les zones avant et/ou arrière (40) forment une bande de flux magnétique passant sur la longueur du véhicule qui est éventuellement interrompue par les aimants de freinage (50).

15. Véhicule en sustentation magnétique selon une des revendications 7 à 14 **caractérisé en ce que** les structures magnétiques (31, 56, 57) contiguës à la zone avant et/ou arrière (40) sont munies d'enroulements et de noyaux prolongés dans le sens longitudinal du véhicule en comparaison aux autres structures magnétiques.
